# EUROPEAN PATENT SPECIFICATION

(11) **EP 3 312 330 B1**
(45) Date of publication and mention of the grant of the patent: **28.07.2021**
(21) Application number: 15895475.0
(22) Date of filing: 30.11.2015
(51) Int. Cl.: D06F 33/00

(54) **INTELLIGENT TERMINAL FOR CONTROLLING WASHING OF CLOTHES AND A CONTROL METHOD**
INTELLIGENTES TERMINAL ZUR STEUERUNG DES WASCHENS VON KLEIDUNG UND EIN STEUERUNGSVERFAHREN
TERMINAL INTELLIGENT POUR LE CONTRÔLE DU LAVAGE DES VÊTEMENTS ET MÉTHODE DE CONTRÔLE

(30) Priority: 17.06.2015 CN 201510337977
(43) Date of publication of application: 25.04.2018
(73) Proprietor: Qingdao Haier Washing Machine Co., Ltd., Qingdao, Shandong 266101 (CN)
(72) Inventor: SHU, Hai, Qingdao Shandong 266101 (CN); XU, Sheng, Qingdao Shandong 266101 (CN); YIN, Junming, Qingdao Shandong 266101 (CN); HUANG, Zhenxing, Qingdao Shandong 266101 (CN); LI, Yan, Qingdao Shandong 266101 (CN)
(74) Representative: Beck & Rössig European Patent Attorneys
(86) International application number: PCT/CN2015/095924
(87) International publication number: WO 2016/201908

(56) References cited:
- EP-A2- 1 143 313
- EP-A2- 1 186 695
- EP-A2- 1 199 394
- CN-A- 1 350 085
- CN-A- 103 046 290
- JP-A- H10 276 478
- US-A1- 2002 095 483
- US-A1- 2005 109 070
- None

## Description

The present invention relates to the field of clothes washing, and in particular to an intelligent terminal for controlling washing of clothes and a control method.

Along with the development of communication technology of Internet of Things, intelligentization of clothes washing has also been improved rapidly. More and more washing machines are connected with terminals through a communication module, thereby realizing interactive operation between the terminal and the washing machine. The washing procedures which can be selected by users also become diversified, while the diversification of washing procedures also brings about troubles to users, as users cannot determine which washing procedure is more appropriate. Sometimes when a wrong procedure is selected, the clothes will be damaged, the water consumption and power consumption will be increased, and the bacteria in the washing machine will also be increased. Especially for the busy office workers who even do not have time to study the feature of each washing procedure or to make a correct plan for their clothes washing.

Along with the rapid development of science and technology, the pace of life becomes more and more rapid, users want to possess an intelligent system which can intelligently recommend related clothes washing recommendations based on their own clothes washing habits, and realize pushing of individualized recommendations to users.

An intelligent terminal for controlling washing of clothes comprising the features of the preamble portion of claim 1 is known from EP 1 199 394 A2.

According to EP 1 199 394 A2, a communication function is provided in a washing machine for connection with a service provider via the Internet. The service provider monitors a history about the use of the washing machine by the user for a predetermined period of time, stores the monitored results in a database, analyzes and arranges the stored information and feeds the analyzed and arranged result back to the user. Therefore, the service provider provides the user with a correct procedure concerning the amounts of wash water and electric power to be used and the number of washing times. Further, the service provider monitors any abnormal state of the washing machine at all times and manages the machine in an appropriate manner according to the monitored result. The service provider generates control information regarding an optimum washing environment of the washing machine on the basis of comparison-analyzed data. The control information may contain information for pointing out an incorrect using pattern of the user and management information about an abnormal state of the washing machine. The service provider transmits the control information to the washing machine when it is connected again to the machine. Then, the transmitted control information is delivered to a CPU in a controller of the washing machine. The CPU analyzes or appropriately processes the delivered control information and outputs the analyzed or processed result to an output unit that displays the output information from the CPU on a screen so that it can be recognized by the user.

The technical problem to be solved by the present invention is to improve washing of clothes by providing even better washing recommendations to users.

This technical problem is solved by an intelligent terminal for controlling washing of clothes comprising the features of claim 1. This technical problem is solved by a control method comprising the features of claim 7. Advantageous embodiments are indicated in further claims.

The technical solution provided by the specific implementation of the present disclosure has the following beneficial effects:
Through statistics and analysis of the daily washing records of users, big data is utilized to push washing recommendations related to washing records of users to users, thereby proper washing recommendations are recommended to users, and the aim of pushing individualized recommendations to users is realized.

In order to describe the technical solution in the specific implementation of the present disclosure more clearly, a brief introduction will be given below on the accompanying drawings required to be used in the specific implementations. Apparently, the drawings described below are merely some embodiments of the present disclosure, and those of ordinary skill in the art can obtain other drawings based on these drawings without any creative effort.
Fig. 1 is a structural schematic diagram of the intelligent clothes washing control system provided by the present disclosure;
Fig. 2 is a structural schematic diagram of another intelligent clothes washing control system provided by the present disclosure;
Fig. 3 is a schematic diagram of the terminal display interface of the intelligent clothes washing control system provided by the present disclosure;
Fig. 4 is a method flow chart of the intelligent clothes washing control method provided by the present disclosure.

### Detailed Description of the Embodiments

### Embodiment 1

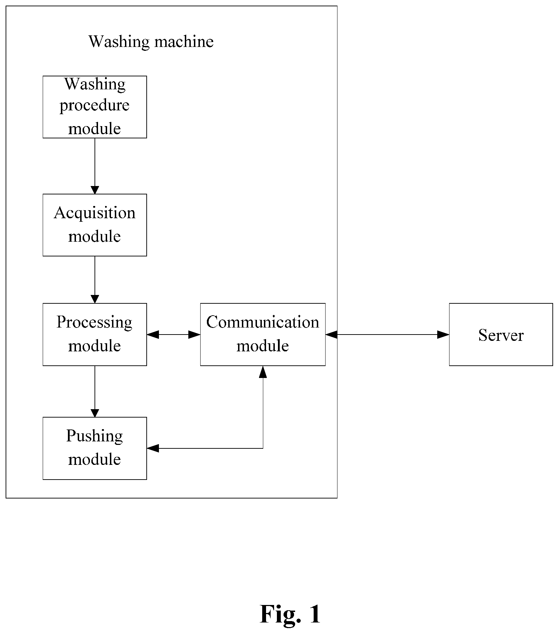

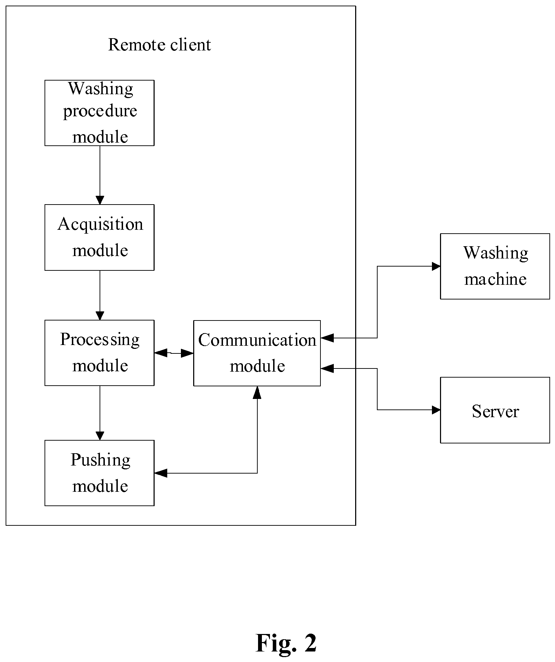

As shown in Fig. 1 and Fig. 2, the present embodiment provides an intelligent clothes washing control system, wherein the system at least includes a washing procedure module, an acquisition module, a processing module, a recommendation module and a communication module which are arranged at an intelligent terminal, and a server which is arranged in a cloud. The terminal is connected with the server through a communication module, wherein the terminal is a washing machine or a remote client which controls the washing machine.

The washing procedure module includes at least one washing procedure. Preferably, the washing procedure module can be classified into various washing procedures based on different classification standards. In terms of the standard of clothes materials, the washing procedure module can be classified into such washing procedures as cotton and linen coat, cotton and linen pants, cotton underwear, chemical fiber coat, chemical fiber pants, denim jacket, jeans, polyester coat, polyester pants, polyamide coat and polyamide pants. In terms of children standard, the washing procedure module can be classified into such washing procedures as children's coat and children's underwear. In terms of clothes mixed washing standard, the washing procedure module can be classified into mixed washing procedure. In terms of home textile standard, the washing procedure module can be classified into such washing procedures as bed sheets, quilt covers, cotton and linen curtains, yarn curtains and woolen blanket. In terms of clothes washable degree, the washing procedure module can be classified into such washing procedures as down jacket, woolen sweater, real silk coat, interchange jacket, cotton dress, yarn dress, chemical fiber shirt, cotton and linen shirt, work clothes and school uniform. And in terms of season standard, the washing procedure module can be classified into such washing procedures as summer, spring, autumn and winter. Preferably, in terms of daily washing standard, the washing procedure module can also be classified into such washing procedures as commonly-used washing, standard washing, rapid washing, light washing, fine washing, bucket cleaning, air drying and water recovery.

Preferably, the washing procedure module further includes classifying the washing procedures which are most frequently used in one category based on the frequency of the washing procedures used by users, so as to be directly used by users with no need of reselecting from numerous washing procedures during each clothes washing.

Preferably, the washing procedure is displayed on the terminal interface in a scenarized form, namely, aiming at the feature of the washing procedure, the name of the washing procedure is displayed on the terminal interface in a concise, easily-understood and individualized manner. Each washing procedure is preferably equipped with a washing background image matched with the washing feature, to facilitate users in rapidly understanding the feature of the washing procedure. For example, for the summer washing procedure classified in terms of season, the washing procedure is featured by shorter washing time, and the washing time is only 20 minutes; then the name of the washing procedure displayed on the terminal is "rapid washing in summer", and the background image of the washing procedure is displayed with related summer scenes and the time "20 minutes" of the washing procedure.

Preferably, the washing procedure module acquires washing procedures from the server via the communication module.

Preferably, each washing procedure is linked with a clothes washing tip which is used for describing the feature of the washing procedure and the washing recommendations recommended aiming at the washing procedure. For example, for the mixed washing procedure, after users select the mixed washing procedure, the users manually select the clothes washing tip or the clothes washing tip pops up automatically. And the feature of the mixed washing procedure displayed on the terminal interface is "being applicable to mixed washing of the clothes of such materials as cotton and linen and chemical fiber", and the recommended washing recommendations displayed below the feature of the washing procedure is as follows: "please confirm whether the clothes are suitable for mixed washing before washing, and please separately wash the clothes of dark colors."

The acquisition module is used for acquiring the washing records of the washing procedures. When users select a washing procedure and send the washing procedure to a washing machine to execute washing, the acquisition module acquires the washing records of the washing procedures. Wherein the washing records at least include one or more items selected from a group containing the name of the washing procedures, the clothes materials to which the washing procedure is applied, the use date of the washing procedure, the washing parameters corresponding to the washing procedures.

Wherein the washing procedures which are applied to clothes material are the washing procedures classified in terms of the clothes materials, and preferred clothes material information can be obtained from the name of the washing procedures.

Wherein the washing parameters at least include one or more items selected from a group containing washing water level, washing temperature, washing time, rotating time of a motor during washing, stop time of a motor during washing, motor speed during washing, rinsing times, rinsing time, dehydration speed, dehydration time, automatic adding of detergent, automatic adding of softener, automatic adding of washing liquid.

Preferably, the acquisition module further acquires life information related to the life of users, and the life information at least includes the current position information and/or weather information and/or season information. Since the life information of users, such as the water quality of the current geographic position, weather and season, sometimes will influence the clothes washing and the selection of washing procedures, therefore, the acquisition of the life information of users is beneficial for the server to recommend washing recommendations related to life information to users.

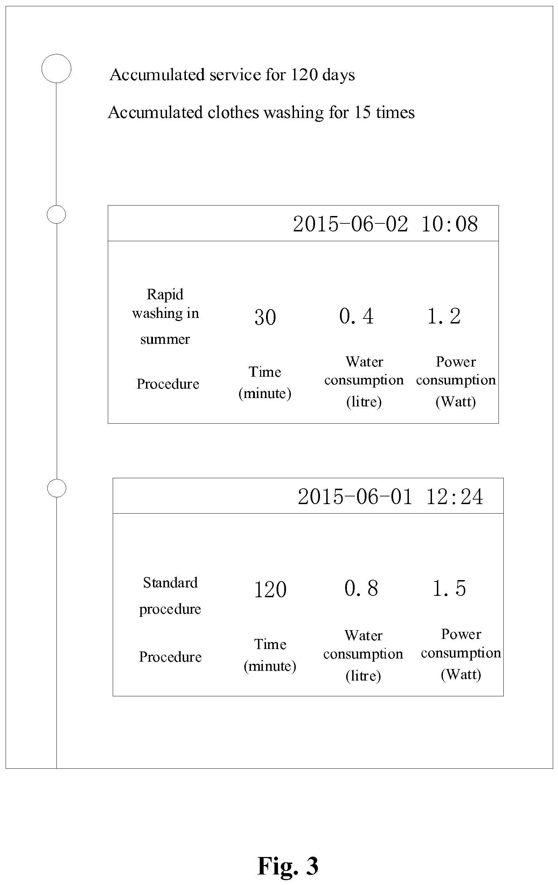

The processing module sends the washing records and the life information to the server for analysis. Preferably, the processing module displays the washing records on the terminal interface in a sequential order of the use date of the washing procedures. Preferably, the processing module further calculates the total times and total days of the washing procedures selected by users. Preferably, the processing module calculates the water consumption and power consumption of the washing procedures based on the washing parameters. Preferably, the processing module displays the total times and total days of the washing procedures selected by users and the water consumption and power consumption on the terminal interface based on a sequential sequence of the use date of the washing procedures, as shown in Fig. 3.

The server analyzes the washing records and the life information, utilizes big data to obtain the washing recommendations matched with the washing records and life information, and sends to the recommendation module.

Wherein the washing recommendations sent by the server to the recommendation module at least includes analyzing the washing frequency of users to obtain the washing recommendations matched with the washing frequency; or analyzing the clothes material to which the most frequently-used washing procedure is applied to obtain the washing recommendations matched with the clothes material; or analyzing the water consumption/power consumption of the washing procedures to obtain the washing recommendations matched with the water consumption/power consumption; or analyzing various washing parameters of the washing procedures to obtain the washing recommendations matched with the washing parameters; analyzing the current position information of users to obtain the water quality information matched with the current position information and the washing recommendations matched with the water quality information; or analyzing the current season information to obtain the washing procedures matched with the season information and the washing recommendations; or analyzing the current weather information to obtain the washing procedures matched with the weather information and the washing recommendations.

Preferably, the server analyzes the clothes washing frequency of the washing procedures selected by users based on the total times of the use of the washing procedures and the washing dates in the washing records. For example, if the washing frequency is twice per week, then the server obtains the following washing recommendations matched with a washing frequency of two times which is: "your clothes washing frequency is too low, dirty clothes should not be accumulated to avoid bacteria breeding, please wash clothes timely".

Preferably, the server acquires the clothes materials based on the name of the washing procedures and calculates the clothes materials which are most frequently used, such as cotton and linen, then the server obtains the following washing recommendations matched with cotton and linen which is: "the clothes you wash frequently are cotton and linen clothes, as cotton and linen clothes are easy to breed bacteria, you are recommended to remove bacteria frequently".

Preferably, based on the washing parameters and power of the motor of the washing machine, the server calculates the total water consumption/total power consumption of the washing procedures selected by users in a certain period. For example, the water consumption is 27m³, the power consumption is 13 degrees, and then the server obtains the following washing recommendations which are: "you do well in saving water and electricity, please continue to keep up".

Preferably, the server analyzes the water hardness at the current position based on the current position information of users. For example, the server analyzes that the water hardness of the current position is relatively hard, then the server gives the following washing recommendations: "the current water hardness is relatively hard, please use more softener".

Preferably, the server analyzes the current season information, such as it is summer now, and obtains the washing procedure of "rapid washing in summer" and the washing recommendations that "sweat stain is easily generated in summer, please use the washing procedure of the sweat stain classification in the washing procedure module" matched with summer.

Preferably, the server also pushes the washing procedure corresponding to the washing records and/or life information based on big data, and sends it to the recommendation module. For example, the server obtains the materials of clothes based on the name of the washing procedures and calculates the clothes materials which are most frequently used. Such as, if the material is cotton and linen, then the server acquires the washing procedures "cotton and linen coat", "cotton and linen pants" and "cotton underwear" suitable for washing cotton and linen materials and sends to the recommendation module.

The recommendation module receives the washing recommendations sent by the server and displays the washing recommendations on the terminal interface. Preferably, the recommendation module receives and stores the washing recommendations sent by the server, and updates periodically the washing recommendations of the terminal interface. Preferably, when it is detected that users click the washing recommendations, the recommendation module updates the washing recommendations of the terminal interface.

Preferably, the recommendation module receives the washing procedures sent by the server, and displays the washing procedures on the terminal interface in a linkable form. Users can be directly linked to the page in which the washing procedure is downloaded after clicking the linkage of washing procedure, and users click download button to download the washing parameters corresponding to the washing procedure to a terminal. Further, the washing procedures are displayed below the washing recommendations, and users can select the washing procedures recommended by the recommendation module according to the washing recommendations.

Preferably, the intelligent terminal further includes a role setting module, the role setting module includes at least one character role. Each role corresponds to at least one scenarized washing procedure specially owned by the role, the role can select the scenarized washing procedure corresponding to the role to wash, the acquisition module acquires the washing records of the washing procedure corresponding to the role. The processing module sends the washing records to the server for analysis, and the server recommends the washing procedure corresponding to the role and the washing recommendations based on the role of users.

Wherein the role setting module defines the type of roles based on sex, identity in the family or the number of population. The type of roles at least includes: single nobleman, single noblewoman, lovers' world and parenthood, and each role corresponds to the scenarized washing procedure owned by the role. Preferably, the roles can also be defined by users themselves, including the name of self-defined roles, the image of self-defined roles and the scenarized procedure owned by the self-defined roles, and the scenarized procedure corresponding to the self-defined role can be preferably obtained from the scenarized procedure store of the server.

The scenarized procedures corresponding to single nobleman at least include: smelly socks brothers, rapid washing in summer, sports BOY, artistic master, Otaku, rock and roll youth, golden-collar businessman and water-saving good youth.

The scenarized procedures corresponding to single noblewoman at least include: royal sister, Lolita goddess, bodybuilding goddess, changeable STYLE, intimate washing for boyfriends, gauzy dress washing in summer, colorful clothes washing with no fading, golden-collar businesswoman and water-saving good youth.

The scenarized procedures corresponding to lovers' world at least include: sweet lovers, housekeeping boss, family-orientated good man and childhood sweetheart.

The scenarized procedures corresponding to parenthood at least include: madman in showing off babies, peerless good parents, happy family and he/she has a baby.

Preferably, the scenarized procedures corresponding to the role can also be downloaded from the scenarized procedure store of the server.

Preferably, the intelligent terminal further includes a parameter adjustment module used for adjusting the parameters of the washing procedures. For the well-selected washing procedure, when users are not satisfied with the parameters of the washing procedure, the users can also freely adjust the washing parameters of the procedure. Preferably, aiming at each washing procedure, the adjustable range of parameters is different. When the parameter adjustment module displays the parameter adjustment range on the terminal interface, the parameter adjustment module only displays the adjustment range of parameters in the current procedure. For example, for rapid procedure, the default washing time is 20 minutes, the adjustable range of the washing time is 10-40 minutes, and then the adjustment range of the washing time displayed on the display interface of the intelligent terminal is 10-40 minutes. While for fine washing procedure, the default washing time is 40 minutes, the adjustable range of the washing time is 20-80 minutes, then the adjustment range of the washing time displayed on the display interface of the intelligent terminal is 20-80 minutes.

Preferably, after users adjust the washing procedure, the adjusted washing procedure can be stored in a local terminal or uploaded to the server as a new procedure. Preferably, the washing procedure is available to all other users for downloading. For example, when users wash clothes for the first time, they firstly set the role they want to select, and select scenarized procedure owned by the role or select washing procedures from the scenarized procedure store, adjust the parameters of the washing procedures, and store the adjusted washing procedure on the local terminal or upload to the server for other users to download.

In conclusion, in the present embodiment, through statistics and analysis of the daily washing records of users, big data is utilized to push washing recommendations related to washing records of users to users, thereby recommending proper washing recommendations and related washing recommendations to users, and realizing the aim of pushing individualized recommendations to users.

### Embodiment 2

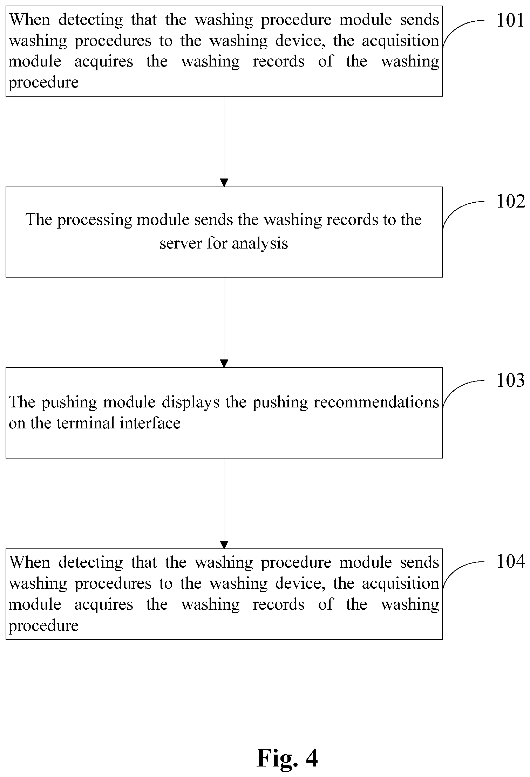

The present embodiment provides an intelligent clothes washing control method, including a terminal and a server, wherein the terminal includes a washing procedure module, an acquisition module, a processing module, a recommendation module and a communication module. The communication module is preferably wireless communication, and is Wi-Fi further preferably. Wherein, the terminal is a washing machine or a remote client which controls the washing machine. As shown in Fig. 4, the method includes:
Step 101: the acquisition module acquires the washing records of the washing procedure when it is detected that the washing procedure module sends washing procedures to the washing device.
   Specifically, when users select a washing procedure of the washing procedure module and sends it to the washing device to process washing, the acquisition module acquires the washing records corresponding to the washing procedure.
   Wherein the washing records at least include one or more items selected from a group containing the name of the washing procedure, the clothes materials to which the washing procedure is applied, the use date of the washing procedure, the washing parameters corresponding to the washing procedure; and the washing parameters at least include washing water level, washing temperature, washing time, rotating time of a motor during washing, stop time of a motor during washing, motor speed during washing, rinsing times, rinsing time, dehydration speed, dehydration time, automatic adding of detergent, automatic adding of softener, automatic adding of washing liquid.
   Preferably, the acquisition module further acquires life information related to the life of users, and the life information at least includes the current position information and/or weather information and/or season information.
   Preferably, after the washing procedure module sends a washing procedure to the washing device, the washing time of the washing procedure will be countdown displayed on the terminal interface. Preferably, the terminal can also calculate the estimated time of finishing clothes washing based on the current time and the washing time of the washing procedure. For example, if the current time is 18:17, the washing time is 120 minutes, and then the estimated time of finishing clothes washing is 20:17. If the washing time changes, then the estimated time is also changed.
Step 102: the processing module sends the washing records to the server for analysis.
   Preferably, the processing module displays the washing records on the terminal interface in a sequential order of the use date of the washing procedures. Preferably, the processing module further calculates the total times and total days of using the washing procedures by users. Preferably, the processing module calculates the water consumption and power consumption of the washing procedures based on the washing parameters. Preferably, the processing module displays the total times and total days of using the washing procedures by users and the water consumption and power consumption on the terminal interface based on a sequential sequence of the use date of the washing procedures, as shown in Fig. 3.
   Preferably, the processing module further sends the life information to the server for analysis.
Step 103: the server analyzes the information in the washing records to obtain the washing recommendations matched with the washing records, and sends to the recommendation module.
   Preferably, the server further analyzes the life information, obtains the washing recommendations matched with the life information, and sends the washing recommendations to the recommendation module.
   Preferably, the server also receives the washing parameters of the current operation state fed back by the washing device, and stores the washing parameters in the server. The server compares the washing parameters of the washing procedure selected by users with the washing parameters of the operating state fed back by the washing device to analyze and obtains the clothes washing result, and obtains corresponding washing recommendations based on the clothes washing result. For example, after users send the washing procedure to the washing device, they lower the water level in the halfway, then the washing device feeds back the lowered water level to the server, the server compares the change of the water level and obtains the following washing recommendations: "the quantity of clothes is less, the set water level is too high, if fewer clothes are washed next time, please appropriately lower the set water level".
   Preferably, the server pushes the washing procedures corresponding to the washing records and/or life information based on big data, and sends to the recommendation module.
Step 104: the recommendation module displays the washing recommendations on the terminal interface.

Preferably, the recommendation module receives and stores the washing recommendations sent by the server, and periodically updates the washing recommendations of the terminal interface. Preferably, when it is detected that users click the washing recommendations, the recommendation module updates the washing recommendations of the terminal interface.

Preferably, the recommendation module receives the washing procedures sent by the server, and displays the washing procedures on the terminal interface in a linkable form. Users can directly link to the page for downloading the washing procedure after clicking the linkage of washing procedure, and users click download button to download the washing parameters corresponding to the washing procedure to a terminal. Further, the washing procedures are displayed below the washing recommendations, and users can select the washing procedures recommended by the recommendation module according to the washing recommendations.

In conclusion, in the present embodiment, through statistics and analysis of the daily washing records of users, big data is utilized to push washing recommendations related to washing records of users to users, thereby recommending proper washing recommendations and related washing recommendations to users, and realizing the aim of pushing individualized recommendations to users.

What is described above is merely the preferred embodiments of the present disclosure, rather than limiting the present disclosure in any form, although the present disclosure has been disclosed above with the preferred embodiments, the preferred embodiments are not used for limiting the present disclosure, those skilled in the art can make some changes without departing from the scope of the claims.

## Claims

1. An intelligent terminal for controlling washing of clothes, at least comprising:
a washing procedure module (1), an acquisition module (2), a processing module (3), a recommendation module (4) and a communication module (5), all modules being arranged at said intelligent terminal,
wherein,
the intelligent terminal is a washing machine or a remote client which controls the washing machine;
the intelligent terminal (6) is configured to communicate via the communication module (5) with a server (7), which is arranged in a cloud;
the washing procedure module (1) comprises at least one washing procedure;
the acquisition module (2) is configured to acquire a washing record of the washing procedure, the washing record of the washing procedure at least comprises one or more items selected from a group containing a name of the washing procedure, clothes materials to which the washing procedure is applied, a use data of the washing procedure, a washing parameter corresponding to the washing procedure;
the washing parameter at least comprises one or more items selected from a group containing a washing water level, a washing temperature, a washing time, a rotating time of a motor during washing, a stop time of the motor during washing, a motor speed during washing, a rinsing times, a rinsing time, a dehydration speed, a dehydration time, an automatic adding of detergent, an automatic adding of softener, an automatic adding of washing liquid;
the processing module (3) is configured to send via the communication module (5) the washing record to the server (7) for analysis;
**characterized in that**
the recommendation module (4) is configured to display a washing recommendation sent by the server (7) on an interface of the terminal, said washing recommendation being obtained by the server (7) by analyzing the washing record and utilizing a big data, through statistics and analysis of washing records of users to obtain a washing recommendation matched with the washing record;
the washing recommendation received from the sever (7) by the recommendation module (4) at least comprises:
analyzing a washing frequency of a user to obtain washing recommendation matched with the washing frequency; or
analyzing the clothes materials to which a most frequently-used washing procedure is applied to obtain the washing recommendation matched with the clothes material; or
analyzing a water consumption/power consumption of the washing procedure to obtain the washing recommendation matched with the water consumption/power consumption; or
analyzing each washing parameter of the washing procedure to obtain the washing recommendation matched with the washing parameter.

2. The intelligent terminal for controlling washing of clothes according to claim 1, wherein the acquisition module (2) is configured to acquire a life information related to the life of the user, and
the life information at least comprises a current position information and/or a weather information and/or a season information.

3. The intelligent terminal for controlling washing of clothes according to claim 2, wherein the server (7) analyzes the life information, utilizes big data to obtain the washing recommendation matched with the life information, and sends to the recommendation module (4);
the washing recommendation sent by the server (7) to the recommendation module (4) at least comprises:
analyzing the current position information of the user to obtain a water quality information matched with the current position information and the washing recommendation matched with the water quality information; or
analyzing the current season information to obtain the washing procedure and washing recommendation matched with the season information; or
analyzing the current weather information to obtain the washing procedure and washing recommendation matched with the current weather information.

4. The intelligent terminal for controlling washing of clothes according to any one of claims from 1 to 3, wherein the recommendation module (4) is configured to receive and store the washing recommendation sent by the server (7), and periodically updates the washing recommendation of the interface of the terminal; or
the recommendation module (4) is configured to update the washing recommendation of the interface of the terminal when it is detected that the user clicks the washing recommendation.

5. The intelligent terminal for controlling washing of clothes according to claim 1, wherein the processing module (3) is configured to display the washing record on the interface of the terminal based on a sequential order of a washing date.

6. An intelligent clothes washing control system comprising:
the intelligent terminal of any of claims 1 to 5 and a server (7) which is arranged in a cloud.

7. A control method for the intelligent clothes washing control system of claim 6, comprising the following steps:
step A1: the acquisition module (2) acquiring a washing record of a washing procedure when it is detected that the washing procedure module (1) sends the washing procedure to a washing device;
step A2: the processing module (3) sending the washing record to the server (7) for analysis;
step A3: the server (7) analyzing information in the washing record to obtain a washing recommendation matched with the washing record, and sending to the recommendation module (4); and
step A4: the recommendation module (4) displaying the washing recommendation on an interface of a terminal.

8. The control method according to claim 7, wherein,
the step A1 further comprises a step that the acquisition module (2) acquires a life information related to the life of user;
the step A2 further comprises a step that the processing module (3) displays the washing record on the interface the terminal and sends the life information to the server (7) for analysis; and
the step A3 further comprises a step that the server (7) analyzes the life information to obtain the washing recommendation matched with the life information, and sends to the recommendation module (4).

## Patentansprüche

1. Intelligentes Endgerät zum Steuern des Waschens von Kleidung, das mindestens Folgendes umfasst:
ein Waschverfahrensmodul (1), ein Erfassungsmodul (2), ein Verarbeitungsmodul (3), ein Empfehlungsmodul (4) und ein Kommunikationsmodul (5), wobei alle Module an dem intelligenten Endgerät angeordnet sind,
wobei,
das intelligente Endgerät eine Waschmaschine oder ein Remote Client ist, der die Waschmaschine steuert;
das intelligente Endgerät (6) dazu konfiguriert ist, über das Kommunikationsmodul (5) mit einem Server (7) zu kommunizieren, der in einer Cloud angeordnet ist;
das Waschverfahrensmodul (1) mindestens ein Waschverfahren umfasst;
das Erfassungsmodul (2) dazu konfiguriert ist, einen Waschdatensatz des Waschverfahrens zu erfassen, wobei der Waschdatensatz des Waschverfahrens mindestens ein oder mehrere Elemente umfasst, die aus einer Gruppe ausgewählt sind, welche einen Namen des Waschverfahrens, Kleidungsmaterialien, auf die das Waschverfahren angewendet wird, Verwendungsdaten des Waschverfahrens und einen dem Waschverfahren entsprechenden Waschparameter enthält;
der Waschparameter mindestens ein oder mehrere Elemente umfasst, die aus einer Gruppe ausgewählt sind, welche einen Waschwasserstand, eine Waschtemperatur, eine Waschzeit, eine Drehzahl eines Motors während des Waschens, eine Stoppzeit des Motors während des Waschens, eine Motordrehzahl während des Waschens, eine Spülanzahl, eine Spülzeit, eine Entwässerungsgeschwindigkeit, eine Entwässerungszeit, eine automatische Zugabe von Waschmittel, eine automatische Zugabe von Weichspüler, eine automatische Zugabe von Waschflüssigkeit enthält;
das Verarbeitungsmodul (3) dazu konfiguriert ist, den Waschdatensatz über das Kommunikationsmodul (5) an den Server (7) zur Analyse zu senden;
**dadurch gekennzeichnet, dass**
das Empfehlungsmodul (4) dazu konfiguriert ist, eine Waschempfehlung, die von dem Server (7) gesendet wird, auf einer Benutzeroberfläche des Endgerätes anzuzeigen, wobei die Waschempfehlung von dem Server (7) durch Analysieren des Waschdatensatzes und Verwenden von Big Data durch Statistik und Analyse von Waschdatensätzen von Benutzern erhalten wird, um eine mit dem Waschdatensatz abgestimmte Waschempfehlung zu erhalten;
wobei die von dem Server (7) durch das Empfehlungsmodul (4) empfangene Waschempfehlung mindestens Folgendes umfasst:
Analysieren einer Waschfrequenz eines Benutzers, um eine mit der Waschfrequenz abgestimmte Waschempfehlung zu erhalten; oder
Analysieren der Kleidungsmaterialien, auf die ein am häufigsten verwendetes Waschverfahren angewendet wird, um die auf das Kleidungsmaterial abgestimmte Waschempfehlung zu erhalten; oder
Analysieren eines Wasserverbrauchs/Stromverbrauchs des Waschverfahrens, um die mit dem Wasserverbrauch/Stromverbrauch abgestimmte Waschempfehlung zu erhalten; oder
Analysieren jedes Waschparameters des Waschverfahrens, um die mit dem Waschparameter abgestimmte Waschempfehlung zu erhalten.

2. Intelligentes Endgerät zum Steuern des Waschens von Kleidung nach Anspruch 1, wobei das Erfassungsmodul (2) dazu konfiguriert ist, eine auf das Leben des Benutzers bezogene Lebensinformation zu erfassen, und
wobei die Lebensinformation mindestens eine aktuelle Positionsinformation und/oder eine Wetterinformation und/oder eine Saisoninformation umfasst.

3. Intelligentes Endgerät zum Steuern des Waschens von Kleidung nach Anspruch 2, wobei der Server (7) die Lebensinformation analysiert, Big Data verwendet, um die mit der Lebensinformation abgestimmte Waschempfehlung zu erhalten, und sie an das Empfehlungsmodul (4) sendet;
wobei die von dem Server (7) an das Empfehlungsmodul (4) gesendete Waschempfehlung mindestens Folgendes umfasst:
Analysieren der aktuellen Positionsinformation des Benutzers, um eine mit der aktuellen Positionsinformation abgestimmte Wasserqualitätsinformation und die mit der Wasserqualitätsinformation abgestimmte Waschempfehlung zu erhalten; oder
Analysieren der aktuellen Saisoninformation, um das Waschverfahren und die Waschempfehlung zu erhalten, die mit der Saisoninformation abgestimmt sind; oder
Analysieren der aktuellen Wetterinformation, um das Waschverfahren und die Waschempfehlung zu erhalten, die mit der aktuellen Wetterinformation abgestimmt sind.

4. Intelligentes Endgerät zum Steuern des Waschens von Kleidung nach einem der Ansprüche 1 bis 3, wobei das Empfehlungsmodul (4) dazu konfiguriert ist, die von dem Server (7) gesendete Waschempfehlung zu empfangen und zu speichern, und die Waschempfehlung auf der Benutzeroberfläche des Endgerätes periodisch aktualisiert; oder
wobei das Empfehlungsmodul (4) dazu konfiguriert ist, die Waschempfehlung auf der Benutzeroberfläche des Endgerätes zu aktualisieren, wenn ermittelt wird, dass der Benutzer auf die Waschempfehlung klickt.

5. Intelligentes Endgerät zum Steuern des Waschens von Kleidung nach Anspruch 1, wobei das Verarbeitungsmodul (3) dazu konfiguriert ist, den Waschdatensatz auf der Benutzeroberfläche des Endgerätes basierend auf einer sequenziellen Reihenfolge eines Waschdatums anzuzeigen.

6. Intelligentes System zur Steuerung des Wäschewaschens, umfassend:
das intelligente Endgerät nach einem der Ansprüche 1 bis 5 und einen Server (7), der in einer Cloud angeordnet ist.

7. Steuerverfahren für das intelligente System zur Steuerung des Wäschewaschens nach Anspruch 6, umfassend folgende Schritte:
Schritt A1: Erfassen eines Waschdatensatzes eines Waschverfahrens durch das Erfassungsmodul (2), wenn ermittelt wird, dass das Waschverfahrensmodul (1) das Waschverfahren an eine Waschvorrichtung sendet;
Schritt A2: Senden, durch das Verarbeitungsmodul (3), des Waschdatensatzes an den Server (7) zur Analyse;
Schritt A3: Analysieren von Informationen in dem Waschdatensatz durch den Server (7), um eine mit dem Waschdatensatz abgestimmte Waschempfehlung zu erhalten, und Senden derselben an das Empfehlungsmodul (4); und
Schritt A4: Anzeigen der Waschempfehlung auf einer Benutzeroberfläche eines Endgerätes durch das Empfehlungsmodul (4).

8. Steuerverfahren nach Anspruch 7, wobei
der Schritt A1 des Weiteren einen Schritt umfasst, bei dem das Erfassungsmodul (2) eine auf das Leben des Benutzers bezogene Lebensinformation erfasst;
der Schritt A2 des Weiteren einen Schritt umfasst, bei dem das Verarbeitungsmodul (3) den Waschdatensatz auf der Benutzeroberfläche des Endgerätes anzeigt und die Lebensinformation an den Server (7) zur Analyse sendet; und
der Schritt A3 des Weiteren einen Schritt umfasst, bei dem der Server (7) die Lebensinformation analysiert, um die mit der Lebensinformation abgestimmte Waschempfehlung zu erhalten, und sie an das Empfehlungsmodul (4) sendet.

## Revendications

1. Terminal intelligent pour commander le lavage de vêtements comprenant au moins :
un module de procédure de lavage (1), un module d'acquisition (2), un module de traitement (3), un module de recommandation (4) et un module de communication (5), tous les modules étant placés dans ledit terminal intelligent,
cependant que
le terminal intelligent est une machine à laver ou un client distant qui commande la machine à laver ;
le terminal intelligent (6) est configuré pour communiquer par l'intermédiaire du module de communication (5) avec un serveur (7) qui est placé dans un nuage,
le module de procédure de lavage (1) comprend au moins une procédure de lavage;
le module d'acquisition (2) est configuré pour acquérir un rapport de lavage de la procédure de lavage, le rapport de lavage de la procédure de lavage comprenant au moins un ou plusieurs points sélectionnés dans un groupe contenant un nom de la procédure de lavage, des matières de lavage auxquelles la procédure de lavage est appliquée, une utilisation des données de la procédure de lavage, un paramètre de lavage qui correspond à la procédure de lavage ;
le paramètre de lavage comprend au moins un ou plusieurs points sélectionnés dans un groupe contenant un niveau d'eau de lavage, une température de lavage, un temps de lavage, un temps de rotation d'un moteur pendant le lavage, un temps d'arrêt du moteur pendant le lavage, une vitesse du moteur pendant le lavage, un temps de rinçage, une vitesse de séchage, un temps de séchage, un ajout automatique de produit de lavage, un ajout automatique d'adoucissant, un ajout automatique de liquide de lavage,
le module de traitement (3) est configuré pour envoyer, par le module de communication (5), le rapport de lavage au serveur (7) pour analyse,
**caractérisé en ce que**
le module de recommandation (4) est configuré pour afficher une recommandation de lavage envoyée par le serveur (7) sur une interface du terminal, ladite recommandation de lavage étant obtenue par le serveur (7) en analysant le rapport de lavage et en utilisant des données de masse par les statistiques et l'analyse de rapports de lavage d'utilisateurs pour obtenir une recommandation de lavage qui est assortie au rapport de lavage ;
la recommandation de lavage reçue du serveur (7) par le module de recommandation (4) comprend au moins :
l'analyse d'une fréquence de lavage d'un utilisateur pour obtenir la recommandation de lavage assortie à la fréquence de lavage ou
l'analyse des matières des vêtements auxquelles une procédure de lavage la plus fréquemment utilisée est appliquée pour obtenir la recommandation de lavage assortie à la matière des vêtements ou
l'analyse d'une consommation d'eau/consommation de puissance de la procédure de lavage pour obtenir la recommandation de lavage assortie à la consommation d'eau/consommation de puissance ou
l'analyse de chaque paramètre de lavage de la procédure de lavage pour obtenir la recommandation de lavage assortie au paramètre de lavage.

2. Terminal intelligent pour commander le lavage de vêtements selon la revendication 1, le module d'acquisition (2) étant configuré pour acquérir une information de vie concernant la vie de l'utilisateur et
l'information de vie comprenant au moins une information de position actuelle et/ou une information météo et/ou une information de saison.

3. Terminal intelligent pour commander le lavage de vêtements selon la revendication 2, le serveur (7) analysant l'information de vie en utilisant des données de masse pour obtenir la recommandation de lavage assortie à l'information de vie et l'envoyant au module de recommandation (4),
la recommandation de lavage envoyée par le serveur (7) au module de recommandation (4) comprenant au moins :
l'analyse de l'information de position actuelle de l'utilisateur pour obtenir une information sur la qualité de l'eau assortie à l'information de position actuelle et la recommandation de lavage assortie à l'information sur la qualité de l'eau ou
l'analyse de l'information de saison actuelle pour obtenir la procédure de lavage et la recommandation de lavage assortie à l'information de saison ou
l'analyse de l'information de saison actuelle pour obtenir la procédure de lavage et la recommandation de lavage assortie à l'information de saison ou
l'analyse de météo actuelle pour obtenir la procédure de lavage et la recommandation de lavage assortie à l'information de météo actuelle.

4. Terminal intelligent pour commander le lavage de vêtements selon l'une quelconque des revendications 1 à 3, le module de recommandation (4) étant configuré pour recevoir et stocker la recommandation de lavage envoyée par le serveur (7) et mettant à jour de manière périodique la recommandation de lavage de l'interface du terminal ou
le module de recommandation (4) étant configuré pour mettre à jour la recommandation de lavage de l'interface du terminal lorsqu'il est détecté que l'utilisateur clique sur la recommandation de lavage.

5. Terminal intelligent pour commander le lavage de vêtements selon la revendication 1, le module de traitement (3) étant configuré pour afficher le rapport de lavage sur l'interface du terminal sur la base d'un ordre séquentiel d'une date de lavage.

6. Système de commande intelligente de lavage de vêtements comprenant :
le terminal intelligent de l'une quelconque des revendications 1 à 5 et un serveur (7) qui est placé dans un nuage.

7. Méthode de commande intelligente de lavage de vêtements selon la revendication 6 comprenant les étapes suivantes :
étape A1 : le module d'acquisition (2) qui acquit un rapport de lavage d'une procédure de lavage lorsqu'il est détecté que le module de procédure de lavage (1) envoie la procédure de lavage à un dispositif de lavage ;
étape A2 : le module de traitement (3) qui envoie le rapport de lavage du serveur (7) pour analyse ;
étape A3 : le serveur (7) qui analyse l'information dans le rapport de lavage pour obtenir une recommandation de lavage assortie au rapport de lavage et qui l'envoie au module de recommandation (4) et
étape A4 : le module de recommandation (4) qui affiche la recommandation de lavage sur une interface d'un terminal.

8. Méthode de commande selon la revendication 7, cependant que
l'étape A1 comprend de plus l'étape que le module d'acquisition (2) acquit une information de vie relative à la vie de l'utilisateur,
l'étape A2 comprend de plus une étape que le module de traitement (3) affiche le rapport de lavage sur l'interface du terminal et envoie l'information de vie au serveur (7) pour analyse et
l'étape A3 comprend de plus une étape que le serveur (7) analyse l'information de vie pour obtenir la recommandation de lavage assortie à l'information de vie et envoie au module de recommandation (4).
